# EUROPEAN PATENT APPLICATION

(11) **EP 0 648 637 A1**
(43) Date of publication of application: **19.04.1995**
(21) Application number: 94202382.1
(22) Date of filing: 22.08.1994
(51) Int. Cl.: B60K 15/035

(54) **Vapour recovery system**

(30) Priority: 15.09.1993 US 121932
(71) Applicant: GENERAL MOTORS CORPORATION, Detroit Michigan 48202 (US)
(72) Inventor: Covert, Charles Henry, Manchester, New York 14504 (US); Turner, Kenneth William, Webster, New York 14580 (US); Wagner, Richard William, Albion, New York 14411 (US); Meyer, Karen Marie, Avon, New York 14414 (US)
(74) Representative: Denton, Michael John

(57) **Abstract**

A refuelling vapour recovery system for a vehicle utilises recirculation of a portion of the displaced vapour and combines a vapour vent valve and a recirculation control into a single differential pressure valve assembly (50). A vapour vent conduit (61) provides fuel tank vapour pressure to one side of a diaphragm (58) and, through a restricted orifice (76), to the other side of the diaphragm, the other side being further connected by a recirculation conduit (75) to the tank filler neck (16). When a filler cap (17) closes the filler neck from the atmosphere, the orifice allows pressure to equalise across the diaphragm; and a spring (68) biases the diaphragm to close a vapour vent valve (66). When the filler cap is removed, atmospheric pressure is provided through the recirculation conduit to the other side of the diaphragm, which can then be activated by a relatively small differential pressure to open the vent for relatively unrestricted vapour flow from the tank (10) to a canister (40) during refuelling, with a small portion of the vapour recirculated in a controlled flow through the orifice and recirculation conduit to the filler neck for entrainment in incoming liquid fuel.

## Description

This invention relates to a system for recovering the vapour displaced from a fuel tank during fuel fill using valve apparatus for control of vapour flow to a storage canister and recirculation of a portion of the vapour via the fill pipe.

Emission control standards for vehicle fuel systems are now beginning to require recovery of fuel vapours displaced from a vehicle fuel tank during refuelling. US-A-4,762,156 discusses the use of a liquid seal in a fuel fill pipe with a vapour recirculation system to replace air which would otherwise be drawn into the fill pipe and entrained by the inrushing fuel. Such entrained air has been shown to increase the generation of vapour within the tank during refuelling through liquid seals; and the additional vapour would necessitate a larger storage canister. The apparatus of US-A-4,762,156 uses a vapour vent valve actuated during refuelling to allow a flow of displaced vapour to a storage canister and a separate recirculation valve apparatus effective to recirculate a portion of the displaced vapour to the fuel fill pipe at the filler neck for entrainment in the inrushing fuel at a rate depending on the rate of fuel flow. The vapour so entrained reduces the air drawn into the fill pipe by the inrushing fuel; and this reduces the tendency for additional vapour to form in the process.

A vapour recovery system in accordance with the preamble of Claim 1 is disclosed in US-A-4,714,172. A vapour recovery system in accordance with the present invention is characterised thereover by the features specified in the characterising portion of Claim 1.

This invention is a refuelling vapour recovery system for a vehicle which utilises recirculation of a portion of the displaced vapour and combines a vapour vent valve and a recirculation control into a single differential pressure valve assembly.

The differential pressure valve assembly comprises a housing defining first and second chambers separated by a diaphragm carrying a valve member. An internal conduit has a valve seat engageable by the valve member in response to excess pressure in the second chamber overcoming a biasing spring. A vapour vent conduit connects a vapour collection region of the fuel tank with the first chamber; and a vapour recovery conduit connects the internal conduit with the vapour storage canister.

A vapour recirculation conduit communicates the first chamber of the valve assembly with the filler neck and the second chamber through a restricted orifice. The orifice allows equalisation of pressure across the diaphragm to prevent activation thereof from its first position when the filler neck is closed from the atmosphere by a cap. However, when the cap is removed from the filler neck, the recirculation conduit provides communication of atmospheric pressure to the second chamber to allow the diaphragm to be activated by a differential pressure during refuelling, with a portion of the vapour flow from the tank flowing relatively unrestrictedly to the canister and another portion flowing at a controlled rate through the orifice and the recirculation conduit to the filler neck for recirculation by entrainment in incoming liquid fuel.

Thus, the system of this invention allows cost savings and reduced complexity by providing for valve control by a single differential valve assembly of vapour venting from the fuel tank to a canister during refuelling only and for a portion of the vented vapour to be recirculated through the filler neck and entrainment in liquid fuel during refuelling to reduce the amount of vapour to the canister. The restricted orifice in the vapour recirculation conduit allows pressure equalisation across the diaphragm with the fill pipe closed from the atmosphere to prevent even a small differential pressure from forming; and this allows the valve spring to be calibrated for activation by a small differential pressure when the gas cap is removed to provide atmospheric pressure through the vapour recirculation conduit to the upper side of the diaphragm. Thus, vapour venting via the relatively unrestricted vapour vent conduit is reliably prevented except during refuelling and is reliably provided during refuelling.

The present invention will now be described, by way of example, with reference to the accompanying drawings, in which:-
Figure 1 shows, in schematic diagram, a vehicle fuel storage and refilling system using a vapour recovery system according to this invention;
Figure 2 shows a variation of the system of Figure 1 using a modified fuel fill tube;
Figure 3 shows a float/rollover valve for use in the systems of Figures 1 and 2;
Figure 4 shows a side cutaway view of a differential pressure valve assembly for use in the systems of Figures 1 and 2; and
Figure 5 shows a section view along lines 5-5 of Figure 4.

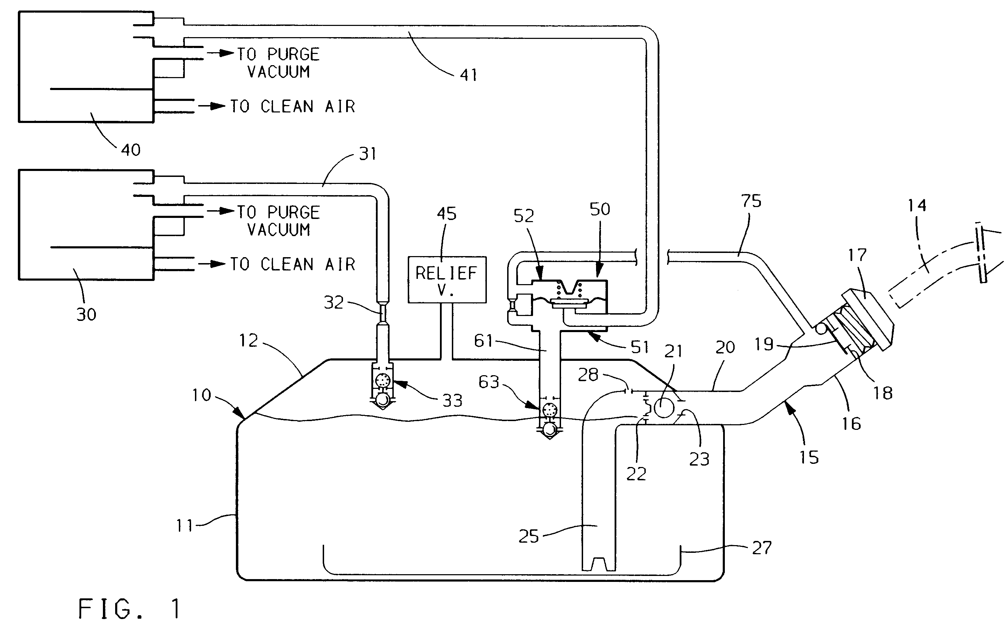

Referring to Figure 1, a motor vehicle fuel tank 10 comprises a lower liquid storage region 11 and an upper vapour dome 12. A fill pipe 15 with a filler neck 16 on the upper end thereof provides entry into tank 10 during refuelling by fuel from a fuel nozzle 14 inserted into filler neck 16. A filler cap 17 is shown in a screwed in position in which it closes the open end of filler neck 16. When filler cap 17 is removed, filler neck 16 is partially closed in the normal manner by a splash shield 18 having a larger opening for the insertion of nozzle 14 and one or more smaller openings for air or vapour flow therethrough. Behind splash shield 18 is a spring loaded flap valve 19 of the normal type which normally covers the large opening in the splash shield but is temporarily dislodged by an inserted nozzle 14 of the proper size to allow refuelling with unleaded fuel. The smaller openings and the clearance between splash shield 18 and an inserted nozzle 14 are sufficient to allow relatively easy gaseous communication between the interior of filler neck 16 and the atmosphere during refuelling.

Fill pipe 15 further comprises a middle portion 20 including an anti-spit back ball 21 contained between a cage 22 on the tank side and a sealing valve seat 23 on the fill side thereof. Liquid flow into the tank 10 is permitted as ball 21 is biased against cage 22; but liquid flow back out the filler neck is substantially prevented when ball 21 is biased by the fuel against sealing valve seat 23. The lower portion 25 of fill pipe 15 extends downward to a point near the bottom of tank 10 within a cup shaped reservoir 27 which always maintains a fluid level above the low end of fill pipe 15 for a liquid seal preventing the escape therethrough of vapour from an "empty" tank. An anti-siphon opening 28 may be provided on the upper side of middle portion 20 of fill pipe 15 below anti-spit back ball 21 to provide an additional relief passage of high vapour pressure within tank 10 around the liquid seal in lower portion 25 upon the removal of filler cap 17 if anti-spit back ball 21 does not operate correctly.

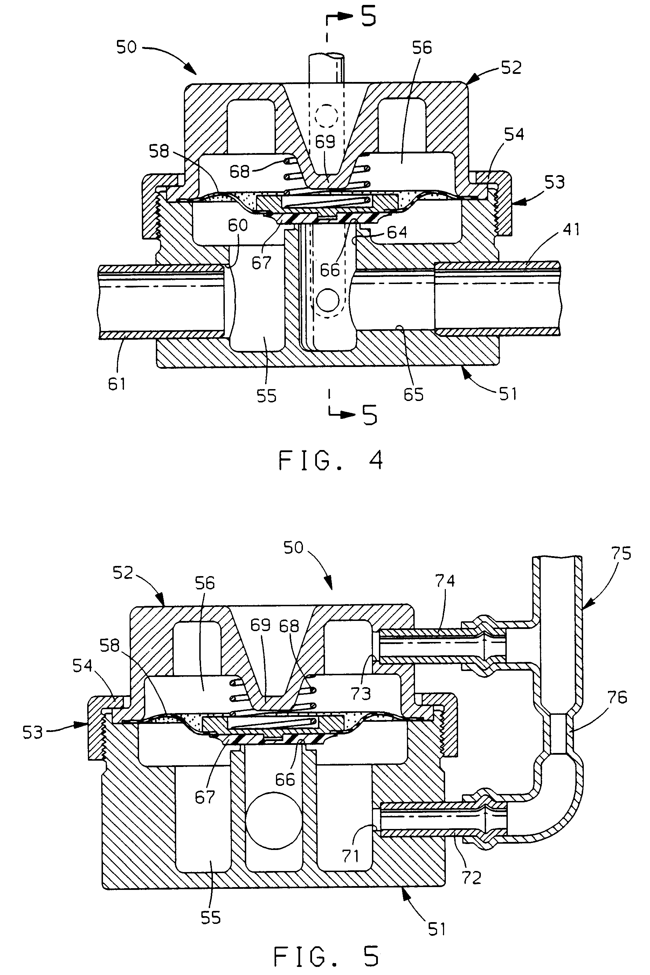

A standard vapour storage canister 30 is connected by a vapour recovery conduit 31 to vapour dome 12 of tank 10 through an orifice 32 and a float/rollover valve 33. Valve 33 serves to prevent entry of liquid fuel into canister 30 during refuelling or vehicle rollover. Many designs for such valves are known, including a design shown in Figure 3 and described at a later point in this specification.

Orifice 32, which may be for example 1.40 mm (0.055 inches) in diameter, restricts vapour flow from tank 10 to canister 30 so as to reduce the creation of additional vapour within tank 10. This restriction is such that it may be unable to conduct the much larger flow of vapour displaced from tank 10 during vehicle refuelling. Therefore, canister 40, which is provided to store the vapour displaced during refuelling, is connected to tank 10 through a vapour recovery conduit 41 which is sufficient in flow area to handle the larger vapour flow during refuelling. However, conduit 41, with its free vapour flow, would defeat the purpose of orifice 32 in conduit 31 if kept open all the time.

Therefore, vapour flow through conduit 41 is controlled by a differential pressure valve assembly 50, which prevents vapour flow from tank 10 to canister 40 except during vehicle refuelling. It should be mentioned that the number of canisters is unimportant to this invention: a single canister could be used in place of canisters 30 and 40, as long as it was of sufficient capacity to adsorb the vapour from both conduits 31 and 41. Finally, a relief valve 45 may be provided for relief of unusually high internal tank pressures which would not be encountered during normal operation of the system.

Differential pressure valve assembly 50 is shown in detail in Figures 4 and 5. Valve assembly 50 has a housing comprising lower housing member 51 and upper housing member 52, which are held together by a threaded nut 53 having a clamping flange 54. A generally circular, movable diaphragm 58 is clamped between housing members 51 and 52 so as to define a first or lower chamber 55 generally within housing member 51 and a second or upper chamber 56 generally within housing member 52. An internal conduit 60 is open from lower chamber 55 through the wall of lower housing member 51 to receive a vapour vent conduit 61 which communicates conduit 60 with vapour dome 12 of tank 10, as seen in Figure 1. Vapour vent conduit 61 ends in a float/rollover valve 63 at its lower end.

Referring to Figure 4, lower housing member 51 further defines an internal conduit 64 ending in a circular valve seat 66 open to lower chamber 55. A branch 65 of internal conduit 64 is open through the wall of lower housing member 51 to receive the end of vapour recovery conduit 41. Diaphragm 58 carries a valve member 67 which, with the diaphragm in a first or lower position, engages valve seat 66 to close internal conduit 64 from lower chamber 55. A compression spring 68, anchored on a spring platform 69 in upper housing member 52, biases diaphragm 58 and valve member 67 toward this position. However, diaphragm 58 is capable of being raised by a pressure differential sufficient to overcome spring 68 to a second or higher position in which valve member 67 disengages from valve seat 66 so that vapour dome 12 of tank 10 communicates with canister 40 through vapour vent conduit 61, differential pressure valve assembly 50 and vapour recovery conduit 41. In a modification to the arrangement shown in Figures 4 and 5, the diaphragm 58 and valve member 67 may be integrally formed in one-piece.

A further conduit 71 through the wall of lower housing member 51 from chamber 55 receives a tube 72. In addition, a conduit 73 through the wall of upper housing member 52 from upper chamber 56 receives a tube 74. A vapour recirculation conduit 75 connects filler neck 16 to tube 74 and, through a restricted orifice 76, to tube 72. In a modification to this arrangement, the conduit 71 and tube 72 may be omitted, with a restricted orifice being formed through the diaphragm 58 to replace the externally positioned restricted orifice 76.

Float rollover valve 63 is shown in detail in Figure 3. Vapour vent conduit 61 is received in an upper housing 80 threadedly engaged with an upper portion 81 of a middle housing 82 which projects out of vapour dome 12 of tank 10, gasket 83 providing sealing for tank 10. An internal conduit 84 of middle housing member 82 is open through an internal conduit 85 of upper housing member 80 to conduit 61 and, at its lower end, is fitted with a circular valve seat 86, made of a somewhat pliant material. A lower housing member 88, threaded to the lower end of middle housing member 82, defines a cylindrical upper chamber 89 of diameter greater than that of valve seat 86 and open therethrough to internal conduit 84.

Within upper chamber 89 resides a float ball 90 having diameter sufficient to seal against valve seat 86 when floated upward by liquid fuel. Lower housing member 88 defines, at the bottom of upper chamber 89, a cylindrical region 91 of diameter significantly smaller than that of valve seat 86, float ball 90, upper chamber 89 or conduit 84. Ball 90 is able to rest on lower housing member 88 at the upper edge of region 91 when not floated by liquid or forcibly raised by vapour from below. Four ribs 87 spaced from each other by 90 degrees around the outside of upper chamber 89 guide float ball 90 in vertical movement within chamber 89. Openings, not shown, may be provided through lower housing member 88 near the upper edge of region 91 to allow vapour communication past float ball 90. Region 91 opens to a lower chamber 93 defined by a lower end cap 94 having a plurality of openings 95 communicating with the interior of tank 10. A heavy ball 96 resides in lower chamber 93; and a pin 97 extends downward from float ball 90 to support a flat contact portion 98 within lower chamber 93 adjacent heavy ball 96.

When tank 10 is upright and not full, float ball 90 allows vapour flow out of tank 10 through conduit 61. When the liquid level within tank 10 becomes sufficiently high during refuelling to float ball 90 upward against valve seat 86, the exit of liquid fuel, as well as that of additional vapour, from tank 10 by way of conduit 61 is prevented; and tank pressure spikes upward to close the anti-spit back valve in fill pipe 15, whereupon fuel from nozzle 14 activates the automatic stop mechanism of nozzle 14 to end refuelling.

It is important for heavy vapour flow from tank 10 through valve 63 during refuelling that the diameter of the lower opening into upper chamber 89 be significantly smaller than that of the vapour exit from upper chamber 89 into conduit 61, since otherwise a heavy vapour flow could force float ball 90 upward against valve seat 86 to choke off the flow. The pressure and velocity relationships in upper chamber 89 determined by the diameters of entering and exit passages as described herein as vapour is flowing past float ball 90 creates a force balance on float ball 90 which maintains the ball at a vertical point below valve seat 86. This relationship is not so important for valve 33, since restricted orifice 32 reduces vapour flow to levels which will not lift the float ball to block the passage of vapour. Thus, although the structure of valve 63 may also be used for valve 33, a wide variety of known float valves will suffice.

Although not particularly relevant to this invention, heavy ball 96 has a density much greater than that of fuel so that, in the case of an overturned vehicle, it will act through pin 97 to force float ball 90 against valve seat 86 to prevent the leakage of fuel from tank 10.

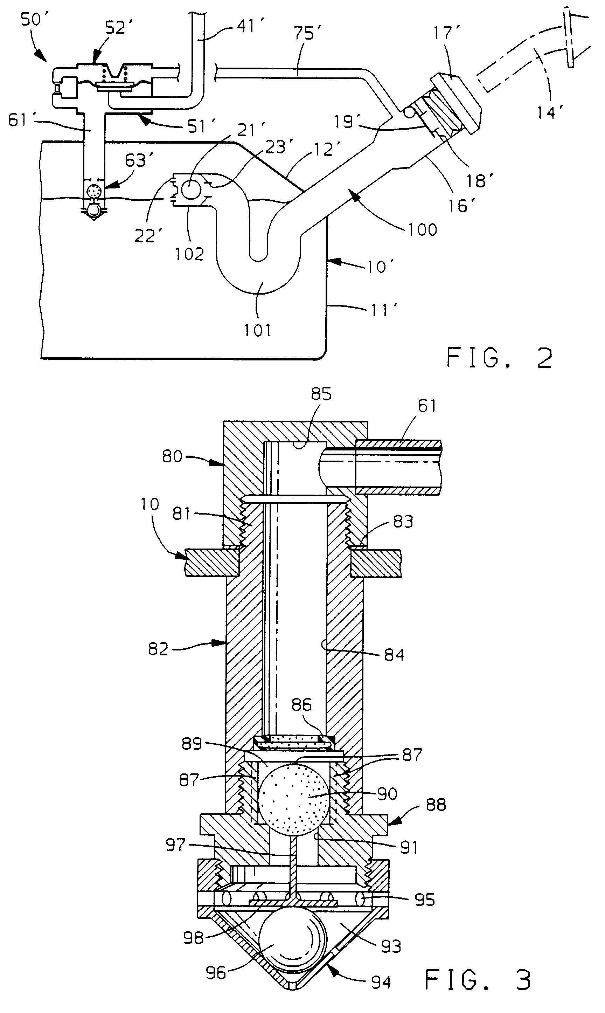

A variation of the system of Figure 1 is shown in Figure 2, wherein primed reference numerals indicate parts of similar structure and function. The only differences in the embodiment of Figure 2 are concerned with the provision of a high feed rather than a low feed fuel fill pipe. Fill pipe 100 has a filler neck 16' similar to that of Figure 1, a trap portion 101, and an inner end portion 102 containing an anti-spit back ball 21 with cage 22 and valve seat 23 similar to that of Figure 1. Since the liquid seal is formed in trap portion 101, the lower cup shaped reservoir 27 of Figure 1 is not necessary.

The operation of the system of Figure 1 is as follows; and the operation of the system of Figure 2 is similar. During vehicle operation other than refuelling, restriction 76 in conduit 75 permits slow equalisation of the pressure across diaphragm 58; and spring 68 biases valve member 67 against valve seat 66 to prevent vapour from escaping tank 10 by way of conduit 41 to canister 40. Most vapour flow is at a slow rate through restricted conduit 31 to canister 30. Additionally, some small amount of vapour will flow through restriction 76 and conduit 75 or through fill pipe 15 to filler neck 16; but it cannot escape the system due to the seal of filler cap 17.

When filler cap 17 is removed for refuelling, conduit 75 is exposed to atmospheric pressure through filler neck 16. If the pressure in tank 10 is a calibrated pressure, such as 101.6 mm (4 inches) of water, above atmosphere, spring 68 will be overcome and diaphragm 58 will move to its upper position. Lower chamber 55 will thus be open to conduit 41. If the pressure in tank 10 is not sufficient as the filler cap 17 is removed, it will become so as liquid fuel begins to flow from an inserted filler nozzle 14 into tank 10 and displaces vapour within the tank. Most of the displaced vapour will then flow through valve assembly 50 and conduit 41 to canister 40. However, a small, calibrated amount of vapour will instead flow through orifice 76 and conduit 75 to filler neck 16, where it will become entrained in the liquid fuel entering fill pipe 15 through filler neck 16. This reduces the amount of air which would otherwise be entrained in the liquid fuel entering tank 10. Since the surface area between the liquid fuel and vapour bubbles already has fuel vapour on the vapour side, there is much less tendency for more vapour to form. In addition, if the liquid fuel entering tank 10 is at a lower temperature than the fuel, and thus the vapour, within tank 10, the vapour from tank 10 entrained in the liquid fuel entering the tank will be cooled thereby; and at least some of it will condense back into liquid fuel. This will further reduce the vapour that needs to be recovered.

The calibration of orifice 76 must be done with care. If more vapour is allowed to flow to filler neck 16 than can be entrained in the liquid fuel, at least some of the excess might escape to the atmosphere. On the other hand, if less vapour is allowed to flow to filler neck 16 than can be entrained in the liquid fuel, the shortfall might be replaced by air from the atmosphere. The amount of vapour or air that will be entrained in the liquid fuel in the filler neck 16 will vary with the rate of liquid flow through the filler neck. Since the downstream side of orifice 76 is at atmospheric pressure, the rate of fuel flow therethrough to filler neck 16 will vary with excess tank pressure; and this will vary somewhat with the rate of liquid fuel flow into tank 10. Thus, the system appears to be somewhat self-compensating. However, the relationships are not linear; and the diameter of an unvarying orifice 76 must be chosen as a compromise between the limits of liquid fuel flow expected into tank 10. It appears, however, to be possible to find such a compromise value; and one such system has provided acceptable performance with an orifice 76 of 1.63 mm (0.064 inches) diameter. Thus, a flow control valve such as that shown in the previously mentioned US-A-4,762,156 is not necessarily required. Also, the presence of restricted orifice 76 substantially reduces or eliminates the entrainment of air from atmosphere, and reduces the risk of the valve member 67 leaving the valve seat 66 when refuelling is not occurring, when compared to the arrangement shown in previously mentioned US-A-4,714,172.

The system described herein provides reliable activation of a valve to control venting of vapour from tank 10 through the relatively unrestricted vapour vent conduit 61 only during refuelling. It is important to not provide such venting, but to force venting from tank 10 through the restricted conduit 31 at all other times. Therefore, a fixed reference pressure, such as atmospheric pressure, is provided to upper chamber 56 only when filler cap 17 is removed to open upper chamber 56 to the atmosphere through recirculation conduit 75. At all other times, filler cap 17 closes upper chamber 56 from the atmosphere and restricted orifice 76 allows an equalisation of pressure across diaphragm 58 to prevent unintended activation of diaphragm 58 upward against a comparatively small force of spring 68. The comparatively small force of spring 68 provides reliable activation of diaphragm 58 and operation of the fuel fill mechanism during refuelling. At the same time, restricted orifice 76 provides a calibrated flow of vapour to filler neck 16 during refuelling for recirculation. Economy is achieved in the variety of functions provided by a single valve assembly.

Summarising, the orifice 76 allows equalisation of pressure across the diaphragm 58 to prevent activation thereof from its first position when the filler neck 16 is closed from the atmosphere by the filler cap 17, the recirculation conduit 75 provides communication of atmospheric pressure to the second chamber 56 when the filler cap is removed from the filler neck, and allows the diaphragm to be activated by a differential pressure during refuelling, with a portion of the vapour flow from the tank 10 flowing relatively unrestrictedly to the canister 40 and another portion flowing at a controlled rate through the orifice and the recirculation conduit to the filler neck for recirculation by entrainment in incoming liquid fuel.

The disclosures in United States patent application no. 121,932 from which this application claims priority, and in the abstract accompanying this application, are incorporated herein by reference.

## Claims

1. A vapour recovery system for vapour displaced from a fuel tank (10) during refuelling, the fuel tank being connected to a fill pipe (15) having a filler neck (16), the vapour recovery system comprising a vapour storage canister (40); a valve assembly (50) having a housing (51,52) defining first and second chambers (55,56) separated by a diaphragm (58) carrying a valve member (67), the housing further defining an internal conduit (64) separate from the first and second chambers and having an end defining a valve seat (66) adjacent the valve member, the valve member being movable with the diaphragm dependent on pressure differentials between the first and second chamber between a first position in which the valve member engages the valve seat to close the internal conduit to the first chamber and a second position which opens the internal conduit to the first chamber, and spring means (68) biasing the valve member toward the first position; a vapour vent conduit (61) capable of communicating a vapour collection region (12) of the fuel tank with the first chamber of the valve assembly; a vapour recovery conduit (41) communicating the internal conduit with the vapour storage canister; and a conduit (75) capable of communicating the filler neck with the second chamber; characterised in that the conduit for communicating the filler neck with the second chamber is a vapour recirculation conduit (75); and by a restricted orifice (76) communicating the first chamber of the valve assembly with the second chamber of the valve assembly and with the vapour recirculation conduit.

2. A vapour recovery system as claimed in Claim 1, wherein the restricted orifice (76) is positioned in the vapour recirculation conduit (75).

3. A vapour recovery system as claimed in Claim 1 wherein the restricted orifice is positioned in the diaphragm.

4. A vapour recovery system as claimed in any one of Claims 1 to 3, wherein the diaphragm (58) and the valve member (67) are formed separately.

5. A vapour recovery system as claimed in any one of Claims 1 to 3, wherein the diaphragm and the valve member are integrally formed in one-piece.

6. A vapour recovery system as claimed in any one of Claims 1 to 5, wherein valve means (63) is positioned in the vapour vent conduit (61) to substantially prevent fuel entering the first chamber (55) of the valve assembly (50) from the fuel tank (10).
